(19) Europäisches Patentamt
European Patent Office
Office européen des brevets

(11) **EP 4 806 943 A1**

(12) **EUROPEAN PATENT APPLICATION**
published in accordance with Art. 153(4) EPC

(43) Date of publication:
**16.09.2026 Bulletin 2026/38**

(21) Application number: **24903266.5**

(22) Date of filing: **13.09.2024**

(51) International Patent Classification (IPC):
***C08J 5/18*** *(2006.01)* ***B32B 9/00*** *(2006.01)*
***B32B 27/28*** *(2006.01)* ***B32B 27/32*** *(2006.01)*
***B65D 65/40*** *(2006.01)*

(52) Cooperative Patent Classification (CPC):
**B32B 9/00; B32B 27/28; B32B 27/32; B65D 65/40; C08J 5/18**

(86) International application number:
**PCT/JP2024/032902**

(87) International publication number:
**WO 2025/126603 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.12.2023 JP 2023209396**

(71) Applicant: **C.I. TAKIRON Corporation**
**Kita-Ku**
**Osaka-Shi**
**Osaka 530-0001 (JP)**

(72) Inventors:
- **SASAHARA Kazufusa**
  **Osaka-shi, Osaka 530-0001 (JP)**
- **MORI Keiichi**
  **Osaka-shi, Osaka 530-0001 (JP)**
- **OSHIMA Hiroyuki**
  **Osaka-shi, Osaka 530-0001 (JP)**

(74) Representative: **advotec.**
**Patent- und Rechtsanwaltspartnerschaft mbB**
**Widenmayerstraße 4**
**80538 München (DE)**

(54) **BASE MATERIAL FILM FOR PACKAGING FILM**

(57) A base film (F) is configured to be laminated with a sealant film to form a packaging film. The base film (F) includes a stretched film including at least one base layer ($L_{P1}$, $L_{P2}$) containing, as a main component, high-density polyethylene having a density of 0.95 g/cm$^3$ or more. The base film has a storage modulus at 100°C of 400 MPa or more and a heat shrinkage rate in a stretching direction at 120°C of less than 5%.

F
Lp2
La2
LB
La1
Lp1

EP 4 806 943 A1

## Description

### TECHNICAL FIELD

The present invention relates to base films used to form various types of packaging films.

### BACKGROUND ART

Films for forming packaging bags, such as pouches and gusset bags, used for packaging daily necessities, food products, and the like (so-called packaging films) have been enhanced in functionality by laminating films made of the following different materials:

- base film: serves to improve strength and serves as a printing substrate, and is made of nylon, polyester, polypropylene, or the like;
- barrier film: serves to block oxygen, water vapor, light, and the like, and includes films made of a barrier resin such as EVOH (ethylene-vinyl alcohol copolymer), and synthetic resin films on which inorganic materials such as metals including aluminum or oxides thereof are vapor-deposited; and
- sealant film: serves to heat-seal (thermally fuse) films to each other, and is made of low-density polyethylene, linear low-density polyethylene, or the like.

In recent years, reduction in environmental impact has been demanded for plastic products in general, and recyclability has also been demanded for packaging films. However, laminate films made of different materials as described above exhibit poor recyclability due to the difficulty in separating the individual constituent layers. Accordingly, a method of using a single resin material has been proposed as a means for improving recyclability. In view of the fact that polyethylene is most widely used for packaging materials, packaging films with excellent recyclability have been developed in which both the sealant film and the base film are made of polyethylene.

However, packaging films in which both the sealant film and the base film are made of polyethylene exhibit insufficient mechanical strength. Consequently, positional misalignment (so-called print misregistration) tends to occur during printing. In order to avoid such print misregistration, a method has also been proposed in which a uniaxially stretched film made of polyethylene is used as a base film, as disclosed in Patent Document 1.

### CITATION LIST

### PATENT DOCUMENTS

PATENT DOCUMENT 1: Japanese Unexamined Patent Publication No. 2019-171860

### SUMMARY OF THE INVENTION

### TECHNICAL PROBLEM

However, the packaging film of Patent Document 1 uses medium-density polyethylene as a raw material for the base film. Since the difference between the heat-resistant temperature of the base film and the melting temperature of the sealant film is small, the heat resistance of the base film is insufficient, leading to wrinkling during the heat-sealing process in bag making. In addition, although a uniaxially stretched film is used as the base film, its rigidity is insufficient, and positional misalignment (i.e., print misregistration) may occur due to elongation resulting from stress during the printing process.

An object of the present invention is to address the issues associated with conventional base films for packaging films, such as that in Patent Document 1, and to provide a base film for a packaging film that not only has excellent recyclability but also suppresses both print misregistration caused by elongation during the printing process and wrinkling caused by heat sealing during bag making.

### SOLUTION TO THE PROBLEM

Among the inventions, the invention of claim 1 is a base film configured to be laminated with a sealant film to provide a packaging film. The base film includes a stretched film including at least one base layer containing, as a main component, high-density polyethylene having a density of 0.95 g/cm$^3$ or more (hereinafter referred to as "specific high-density polyethylene) (i.e., containing 50 mass% or more of the specific high-density polyethylene). The base film has a

storage modulus at 100°C of 400 MPa or more and a heat shrinkage rate in a stretching direction (machine direction or transverse direction) at 120°C of less than 5%.

According to the invention of claim 2, in the invention of claim 1, the base layer contains 90 mass% or more of the high-density polyethylene.

According to the invention of claim 3, in the invention of claim 1 or 2, a barrier layer made of a barrier resin is interposed between two of the base layers that are made of the specific high-density polyethylene and provided on front and back sides.

According to the invention of claim 4, in the invention of claim 3, the barrier resin contains an ethylene-vinyl alcohol copolymer as a main component.

The invention of claim 5 includes: the base film according to claim 1 or 2; and a vapor-deposited layer provided on one surface of the base film.

The invention of claim 6 includes: the base film according to claim 1 or 2; and a coating layer provided on one surface of the base film.

The invention of claim 7 includes: the barrier base film according to claim 3; and a sealant film laminated on one of the base layers of the barrier base film.

## ADVANTAGES OF THE INVENTION

The base film for a packaging film according to claim 1 (hereinafter simply referred to as "base film") is made of polyethylene. Therefore, there is no need to separate the individual constituent layers when disposing of a packaging film in which a polyethylene sealant film is laminated. Accordingly, the base film is excellent in recyclability. Furthermore, since the base film according to claim 1 is made of polyethylene containing, as a main component, specific high-density polyethylene (high-density polyethylene having a density of 0.95 g/cm$^3$ or more), it can be stretched at a high stretch ratio, resulting in excellent mechanical strength and rigidity. This suppresses print misregistration caused by elongation during the printing process. Moreover, the base film can be stretched at a high stretching temperature, providing excellent heat resistance and suppressing wrinkling during heat sealing in bag making.

The base film according to claim 2 has a high content of the specific high-density polyethylene in the base layer. Therefore, the base film exhibits extremely good recyclability and can be remelted and reprocessed. Furthermore, print misregistration caused by elongation during the printing process and wrinkling caused by heat sealing can be very effectively suppressed.

The barrier base film according to claim 3 includes a barrier layer made of a barrier resin, and the barrier layer is interposed between the two front and back base layers made of the specific high-density polyethylene. Therefore, the barrier base film is excellent in recyclability. The barrier base film can not only effectively suppress print misregistration caused by elongation during the printing process and wrinkling caused by heat sealing, but also impart high barrier properties (properties that suppress the permeation of gases such as oxygen and water vapor) to a packaging bag after bag making.

The barrier base film according to claim 4 uses a barrier resin containing an ethylene-vinyl alcohol copolymer as a main component. Therefore, very high barrier properties can be imparted to a packaging bag after bag making without impairing recyclability.

The barrier base film according to claim 5 includes a vapor-deposited layer on one surface of the base film. Therefore, extremely high barrier properties can be imparted to a packaging bag after bag making without impairing recyclability.

The barrier base film according to claim 6 includes various coating layers on one surface of the base film. Therefore, various barrier properties can be imparted to a packaging bag after bag making.

The packaging film according to claim 7 includes a sealant film laminated on one of the base layers of the barrier base film. Therefore, a packaging bag can be easily formed.

## BRIEF DESCRIPTION OF THE DRAWINGS

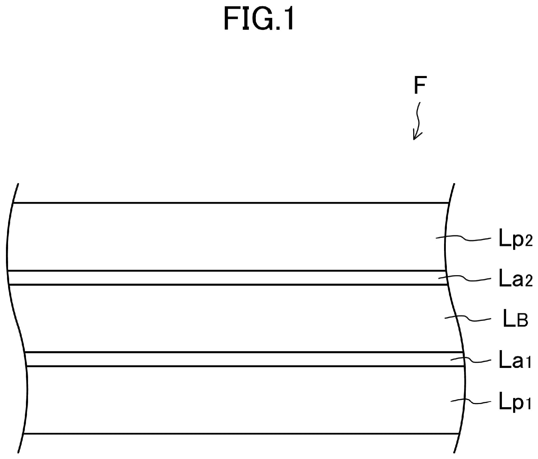

[FIG. 1] An illustration (vertical sectional view) showing a layer structure of a barrier base film.

## DESCRIPTION OF EMBODIMENTS

The base film according to the present invention is composed of a stretched film including a base layer containing, as a main component, specific high-density polyethylene (high-density polyethylene having a density of 0.95 g/cm$^3$ or more). The storage modulus at 100°C and the heat shrinkage rate at 120°C of the base film are adjusted to fall within predetermined numerical ranges. That is, the inventors of the present invention have found that the issues associated with conventional polyethylene-based monomaterial base films, that is, print misregistration caused by elongation during the

printing process and wrinkling caused by heat sealing during bag making, are associated with the density of the polyethylene material and the storage modulus and the heat shrinkage rate of the base film. The inventors have arrived at the present invention based on the finding that the occurrence of print misregistration and wrinkling can be reduced by specifying these physical property values to be simultaneously within predetermined numerical ranges.

The base film according to the present invention needs to include a base layer containing, as a main component, specific high-density polyethylene (that is, high-density polyethylene having a density of 0.95 g/cm$^3$ or more). When the density of the polyethylene is 0.95 g/cm$^3$ or more, the crystallinity of the polyethylene is improved. Therefore, by stretching the film, mechanical strength and rigidity are improved, and print misregistration caused by elongation during the printing process is suppressed. In addition, when the density of the polyethylene is 0.95 g/cm$^3$ or more, stretching at a high temperature becomes possible, whereby heat resistance is improved and wrinkling caused by heat sealing during bag making is suppressed. When the content of the specific high-density polyethylene in the resin material of the base layer is less than 50 mass%, or when the density is less than 0.95 g/cm$^3$, the mechanical strength and heat resistance of the base film become insufficient, which is undesirable. The content of the specific high-density polyethylene in the base layer is more preferably 70 mass% or more, still more preferably 90 mass% or more, and particularly preferably 95 mass% or more.

Examples of methods for obtaining the specific high-density polyethylene (that is, high-density polyethylene having a density of 0.95 g/cm$^3$ or more) include polymerization methods (constant-pressure methods) using a Ziegler-Natta catalyst, a metallocene catalyst, or the like. The density of the specific high-density polyethylene is not particularly limited as long as it is 0.95 g/cm$^3$ or more, but is preferably 0.97 g/cm$^3$ or less. This is because when the density exceeds 0.97 g/cm$^3$, the polyethylene becomes hard and prone to tearing, which may make it difficult to produce a stretched film. In addition, the density of the specific high-density polyethylene, which is the main raw material, is more preferably 0.955 g/cm$^3$ or more, and particularly preferably 0.962 g/cm$^3$ or more.

The melting point of the specific high-density polyethylene is preferably in the range of 130 to 140°C, and more preferably 132 to 140°C. When the melting point is lower than 130°C, stretching cannot be performed at a temperature equal to or higher than a stretching temperature (120°C) described later, and the heat resistance of the stretched film may decrease. The term "melting point" as used herein refers to a value measured in accordance with JIS K 7121:1987, and is obtained by measuring the temperature at which the main endothermic peak appears using a differential scanning calorimeter (DSC).

The melt mass flow rate (MFR) of the specific high-density polyethylene is preferably 0.01 to 3.00 g/10 min, more preferably 0.02 to 2.50 g/10 min, and still more preferably 0.1 to 2.00 g/10 min. This is because when the melt mass flow rate (MFR) is 0.01 g/10 min or more, the specific high-density polyethylene can be extruded by a general-purpose extruder without using special equipment, and when the melt mass flow rate (MFR) is 3.00 g/10 min or less, sufficient film strength can be achieved. The melt mass flow rate is obtained by measurement in accordance with JIS K 7210:1999.

As described above, in order to specify the storage modulus and the heat shrinkage rate of the base film made of the specific high-density polyethylene to be simultaneously within the predetermined numerical ranges of the present invention, it is necessary to stretch an unstretched film (primary film) made of the specific high-density polyethylene, and a method in which stretching is performed at a higher stretching temperature than that typically used can be suitably used. Further, the stretching direction is not particularly limited, and may be the machine direction (MD) or the transverse direction (TD) (biaxial stretching in MD and TD is also possible). The stretch ratio is also not particularly limited, but in the case of uniaxial stretching, it is preferable to stretch the film to more than about 4 times to 10 times in the machine direction or the transverse direction, and in the case of biaxial stretching, it is preferable to stretch the film to more than about 4 times to 10 times in each of the machine direction and the transverse direction. By stretching the film at the above stretch ratio, the mechanical strength and rigidity of the base film are improved, and print misregistration caused by elongation during the printing process can be suppressed. In the case of uniaxial stretching, when the stretch ratio is 3 or less, the film may not be stretched uniformly, resulting in stretching unevenness (uneven stretching). Conversely, when the stretch ratio is greater than 10, the film may break. In the case of uniaxial stretching, the stretch ratio is more preferably 6 or more from the viewpoint of improving mechanical strength and rigidity. In order to stretch the film to more than 4 times to 10 times in uniaxial stretching, it is preferable to use specific high-density polyethylene having a density of 0.95 g/cm$^3$ or more. When polyethylene having a density of less than 0.95 g/cm$^3$ is used, stretching at a stretch ratio of more than 4 may be difficult. As a method for stretching in the machine direction, a method in which the take-up rolls are operated at different rotational speeds can be suitably used, and as a method for stretching in the transverse direction, a method in which the left and right sides of the unstretched film are gripped in a tenter and the film is expanded in the transverse direction can be suitably used.

The stretching temperature for obtaining the above stretched film is not particularly limited, but from the viewpoint of improving dimensional stability achieved by heat treatment and obtaining a film with excellent heat resistance, the stretching temperature is preferably 120°C or more and less than 130°C, which is a higher temperature range than that typically used for polyethylene films. When the stretching temperature is lower than 120°C, both dimensional stability achieved by heat treatment and heat resistance decrease. Consequently, wrinkling tends to occur when the base film is

heat-sealed during bag making, which is undesirable. Conversely, when the stretching temperature is 130°C or higher, melt fracture occurs during film formation, resulting in a reduced yield, which is undesirable. The stretching temperature is more preferably 125°C or more and less than 130°C, and particularly preferably 127°C or more and less than 130°C. When the stretching temperature is 125°C or more, it is preferable to use specific high-density polyethylene having a density of 0.95 g/cm$^3$ or more. When the density is less than 0.95 g/cm$^3$, stretching at 125°C or higher may be difficult.

The base film (stretched film) described above needs to have a storage modulus at 100°C of 400 MPa or more, preferably 500 MPa or more, more preferably 600 MPa or more, and particularly preferably 700 MPa or more. When the storage modulus of the base film at 100°C is less than 400 MPa, print misregistration tends to occur during the printing process, which is undesirable. Although a higher storage modulus of the base film at 100°C is more preferable, the upper limit is considered to be about 1500 MPa in view of the properties of the specific high-density polyethylene, which is the main raw material.

As described above, stretching improves mechanical strength and rigidity (storage modulus), but stretching the film makes heat shrinkage more likely to occur, and wrinkling tends to occur during heat sealing in bag making. Therefore, the base film (stretched film) preferably has a heat shrinkage rate in the stretching direction at 120°C of less than 5%. When the heat shrinkage rate of the base film in the stretching direction at 120°C is 5% or more, wrinkling tends to occur during heat sealing in bag making, which is undesirable. A lower heat shrinkage rate in the stretching direction at 120°C is more preferable. Specifically, the heat shrinkage rate in the stretching direction at 120°C is more preferably less than 3%, still more preferably less than 2%, and particularly preferably less than 1%. When it is less than 0% (that is, when the film elongates at 120°C), wrinkling is instead likely to occur during heat sealing, which is undesirable.

The base film according to the present invention includes a base layer having a single-layer structure and made of the specific high-density polyethylene described above. For example, a film in which a barrier resin layer (that is, a layer made of a barrier resin) is interposed between base layers made of the specific high-density polyethylene described above, or a film in which a barrier resin layer is laminated on one or both surfaces of a base layer made of the specific high-density polyethylene, is referred to as a barrier base film. The barrier resin in the present invention means a resin having a function to suppress the permeation of gases such as oxygen and water vapor. As such a barrier resin, an ethylene-vinyl alcohol copolymer (EVOH), polyvinyl alcohol, a derivative thereof, or the like can be suitably used.

In a case where a barrier resin layer is interposed between base layers made of the specific high-density polyethylene, or in a case where a barrier resin layer is laminated on one or both surfaces of a base layer made of the specific high-density polyethylene, an adhesive layer may be provided between the barrier resin layer and the base layer made of the specific high-density polyethylene. Interposing such an adhesive layer can more effectively suppress delamination between the barrier resin layer and the base layer made of the specific high-density polyethylene. As such an adhesive, acid-modified polyethylene, acid-modified polypropylene, or the like can be suitably used. However, from the standpoint of a monomaterial structure, acid-modified polyethylene is preferred. In the base film according to the present invention, in the case where another layer such as a barrier resin layer is interposed between base layers made of the specific high-density polyethylene or in the case where another layer such as a barrier resin layer is laminated on either or both of the front and back surfaces of a base layer made of the specific high-density polyethylene as described above, it is preferable from the viewpoint of improving recyclability that the barrier base film contain 70 mass% or more of the specific high-density polyethylene, and more preferably 74 mass% or more of the specific high-density polyethylene.

As a method for producing the base film, a raw material containing the specific high-density polyethylene described above is mixed at a predetermined blending ratio, and formed into a film by melt extrusion using an extruder equipped with a T-die, thereby obtaining a primary film before stretching of the base film.

As a method for producing a barrier base film including a barrier resin layer between two front and back base layers made of the specific high-density polyethylene, the resins used for the base layers, the barrier resin layer, and the adhesive layers are prepared, and the resins for these layers are coextruded by a multilayer extruder equipped with a T-die, thereby obtaining a primary film before stretching of the barrier base film.

A stretched base film or a stretched barrier base film is obtained by subjecting the produced primary film before stretching of the base film or barrier base film to uniaxial stretching under the stretching conditions described above.

The thickness of the primary film before stretching is preferably 50 to 300 μm, more preferably 80 to 250 μm, and particularly preferably 100 to 200 μm. When the thickness of the primary film is 50 μm or more, strength sufficient to withstand stress during stretching can be obtained. When the thickness of the primary film is 300 μm or less, sufficient transparency is achieved after stretching.

The thickness of the base layer in the stretched base film and in the stretched barrier base film is preferably 10 to 40 μm, more preferably 15 to 35 μm, and particularly preferably 20 to 30 μm.

The thickness of the barrier resin layer after stretching is preferably 1 to 8 μm, more preferably 2 to 6 μm, and particularly preferably 2.5 to 5.0 μm. When the thickness of the barrier resin layer after stretching is 1 μm or more, sufficient oxygen and water vapor barrier properties for a barrier film can be obtained. When the thickness of the barrier resin layer after stretching is 8 μm or less, a film excellent in recyclability can be obtained.

The thickness of the adhesive layer after stretching is not particularly limited, but is preferably 0.3 to 2 μm, and

more preferably 0.5 to 1.5 μm.

The base film and the barrier base film according to the present invention are used to form a packaging film (that is, a film for forming a packaging bag) by laminating a sealant film on one surface of the base film or the barrier base film. The packaging films are then laminated together such that the sealant film surfaces are joined, and the resulting laminate film is cut into a predetermined shape and heat-sealed at the periphery to form a pouch, a gusset bag, a two-side-sealed bag, a three-side-sealed bag, or the like. As the sealant film to be laminated to the base film according to the present invention, low-density polyethylene (LDPE), linear low-density polyethylene (LLDPE), medium-density polyethylene, or the like can be suitably used. From the viewpoint of improving heat sealability, however, low-density polyethylene (LDPE) or linear low-density polyethylene (LLDPE) is preferred since each of these have a lower melting point than the base film and thus provides a difference in melting point from the base film.

In addition, the base film according to the present invention may be used as a packaging film by laminating, as necessary, on the surface of the base film opposite to the surface to which the sealant film is bonded, a barrier resin layer, a printing layer, a vapor-deposited layer made of a metal such as aluminum oxide or a metal oxide such as silicon dioxide, or a base layer made of commonly used polyethylene (such as low-density polyethylene (LDPE), linear low-density polyethylene (LLDPE), medium-density polyethylene, or high-density polyethylene). In addition, in a case where a vapor-deposited layer made of a metal such as aluminum oxide, a metal oxide such as silicon dioxide, or an inorganic compound is laminated on one surface (or both surfaces) of the base film according to the present invention, it is preferable to provide, between the vapor-deposited layer and the base film, an anchor coating layer made of, for example, a mixture of a urethane-based resin, a curing agent, and a silane coupling agent, in order to improve adhesion of the vapor-deposited layer.

The base film according to the present invention may be used as a packaging film by providing, as necessary, a coating layer between the sealant film and the base film. The coating layer is made of a barrier resin. The barrier resin means a resin having a function to suppress permeation of gases such as oxygen and water vapor. As such a barrier resin, an ethylene-vinyl alcohol copolymer (EVOH), polyvinyl alcohol, a derivative thereof, or the like can be suitably used.

The melting point of the base film (after stretching) made of the specific high-density polyethylene is preferably 135°C or higher. When the melting point of the base film is 135°C or higher, the difference in melting point from the sealant film can be increased, and heat shrinkage of the base film during heat sealing can therefore be suppressed.

Examples

The base film according to the present invention will now be described in more detail based on Examples. However, the present invention is not limited in any way to the forms of such Examples, and may be modified as appropriate without departing from the spirit of the present invention. The methods for evaluating the properties in the Examples and Comparative Examples are as follows.

<Storage Modulus at 100°C>

A stretched film prepared in each of the Examples and Comparative Examples was cut into a test specimen having a length of 50 mm and a width of 4 mm. Using a dynamic mechanical analyzer ("DMA-Q800" manufactured by TA Instruments), the test specimen was mounted on a sample holder, and the storage modulus (MPa) was measured in tensile mode at a frequency of 1 Hz and a load of 0.2 N, over a temperature range from room temperature (about 25°C) to 135°C at a heating rate of 3°C/min.

<Heat Shrinkage Rate at 120°C>

A sample of a predetermined size (12 cm × 12 cm) was cut from the stretched film prepared in each of the Examples and Comparative Examples. Orthogonal gauge lines, each having a length of 10 cm, were marked on the sample so as to be parallel to the respective edges of the sample and located 1 cm inward from each edge. The sample was placed in an oven at 120°C and heated for 10 minutes, and then removed and cooled to room temperature (about 25°C). The distance between the gauge lines in the stretching direction (i.e., MD) was measured for the heat-treated sample. The heat shrinkage rate (%) in the stretching direction was calculated from the change in the distance between the gauge lines before and after heating, using the following equation (1).
[Equation 1]

Heat shrinkage rate (%) in stretching direction = [(distance between gauge lines before heating - distance between gauge lines after heating)/distance between gauge lines before heating] × 100 (1)

<Appearance After Printing>

A packaging film was prepared by bonding (laminating) a 100-μm-thick linear low-density polyethylene (LLDPE) film as a sealant film to one surface of the base film prepared in each of the Examples and Comparative Examples. Using a gravure printing machine equipped with a gravure roll and a doctor blade, a commercially available gravure printing ink was printed on the surface of the packaging film opposite to the sealant film under predetermined conditions (printing speed = 75 m/min, drying temperature = 70°C, and contact pressure of the nip roll against the base film = 0.15 MPa). The printed surface was then subjected to a visual sensory evaluation according to the following four grades.

©: No print misregistration observed
◦: Almost no print misregistration observed
△: Slight print misregistration observed
×: Distinct print misregistration observed

<Appearance After Heat Sealing>

A packaging film was prepared by bonding (laminating) a 100-μm-thick linear low-density polyethylene (LLDPE) film as a sealant film to one surface of the base film prepared in each of the Examples and Comparative Examples. The packaging films thus obtained were then laminated together such that the sealant films are joined. The resulting laminate film was heat-sealed at a temperature of about 120°C using a heat sealer. The heat-sealed surface was then subjected to a visual sensory evaluation according to the following four grades.

©: No wrinkling observed
◦: Almost no wrinkling observed
△: Slight but acceptable wrinkling observed
×: Distinct wrinkling observed

The resin materials used to prepare the stretched films in the Examples and Comparative Examples were as follows.

- HDPE1: High-density polyethylene (density: 0.951 g/cm$^3$, melting point: 133°C, MFR (melt flow rate measured by a method in accordance with JIS K 7210; the same applies hereinafter): 1.0 g/10 min)
- HDPE2: High-density polyethylene (density: 0.960 g/cm$^3$, melting point: 135°C, MFR: 1.0 g/10 min, NOVATEC HY540 manufactured by Japan Polyethylene Corporation)
- MDPE: Medium-density polyethylene (density: 0.943 g/cm$^3$, melting point: 126°C, MFR: 0.24 g/10 min, HI-ZEX 5100E manufactured by Prime Polymer Co., Ltd.)

[Example 1]

<Preparation of Base Film>

The above high-density polyethylene HDPE1 (i.e., specific high-density polyethylene having a density of 0.951 g/cm$^3$) was continuously formed into a film by melt extrusion at a temperature of 200°C using an extruder equipped with a T-die (manufactured by Labtech Engineering Company Ltd.), and the resulting long film was wound onto a take-up roll while being cooled by the take-up roll, thereby obtaining an unstretched film (primary film) having a thickness of about 147 μm. The unstretched film was then stretched to 6.0 times in the machine direction (MD) while being heated to 127°C, thereby preparing a uniaxially stretched polyethylene film (that is, a base film) having a thickness of about 24 μm.

Then, using the prepared base film, the storage modulus at 100°C and the heat shrinkage rate at 120°C were measured by the methods described above. Further, using the prepared base film, the appearance after printing and the appearance after heat sealing were evaluated by the methods described above. The measurement results and evaluation results of the base film of Example 1 are shown in Table 1 together with the properties of the base film.

[Example 2]

A uniaxially stretched polyethylene film (i.e., a base film) of Example 2 was prepared in the same manner as in Example 1 except that the resin material was changed to the high-density polyethylene HDPE2 described above (i.e., specific high-density polyethylene having a density of 0.960 g/cm$^3$). Then, using the prepared base film, the storage modulus at 100°C and the heat shrinkage rate at 120°C were measured by the methods described above, and the

appearance after printing and the appearance after heat sealing were evaluated by the methods described above. The measurement results and evaluation results of the base film of Example 2 are shown in Table 1 together with the properties of the base film.

[Examples 3, 4, and 5]

Uniaxially stretched polyethylene films (i.e., base films) of Examples 3, 4, and 5 were prepared in the same manner as in Example 1 except that the stretching temperature in stretching the unstretched film (primary film) in the machine direction (MD) was changed to 125°C, 120°C, and 128°C, respectively. Then, using the prepared base films, the storage modulus at 100°C and the heat shrinkage rate at 120°C were measured by the methods described above, and the appearance after printing and the appearance after heat sealing were evaluated by the methods described above. The measurement results and evaluation results of the base films of Examples 3, 4, and 5 are shown in Table 1 together with the properties of the base films.

[Example 6]

A uniaxially stretched polyethylene film (i.e., a base film) of Example 6 was prepared in the same manner as in Example 1 except that the stretching temperature in stretching the unstretched film (primary film) in the machine direction (MD) was changed to 125°C and the stretch ratio was changed to 4.5. Then, using the prepared base film, the storage modulus at 100°C and the heat shrinkage rate at 120°C were measured by the methods described above, and the appearance after printing and the appearance after heat sealing were evaluated by the methods described above. The measurement results and evaluation results of the base film of Example 6 are shown in Table 1 together with the properties of the base film.

[Example 7]

A uniaxially stretched polyethylene film (i.e., a base film) of Example 7 was prepared in the same manner as in Example 1 except that the stretch ratio in stretching the unstretched film (primary film) in the machine direction (MD) was changed to 10. Then, using the prepared base film, the storage modulus at 100°C and the heat shrinkage rate at 120°C were measured by the methods described above, and the appearance after printing and the appearance after heat sealing were evaluated by the methods described above. The measurement results and evaluation results of the base film of Example 7 are shown in Table 1 together with the properties of the base film.

[Example 8]

Using a multilayer extruder equipped with a T-die (manufactured by Labtech Engineering Company Ltd.), the following resins a to f were layered and continuously formed into a film by melt extrusion (extrusion temperature: 200°C), and the resulting long film was wound onto a take-up roll while being cooled by the take-up roll, thereby obtaining an unstretched film (laminate film) having a thickness of about 157 μm and having a five-layer structure as shown in FIG. 1. The unstretched film was then stretched to 6.0 times in the machine direction (MD) while being heated to 127°C, thereby preparing a uniaxially stretched polyethylene film (i.e., a barrier base film) of Example 8 having a total thickness of about 25 μm. In the obtained barrier base film, the thicknesses of a first base layer ($L_{P1}$) made of HDPE1, a first adhesive layer ($L_{a1}$) made of acid-modified polyethylene, a barrier resin layer ($L_B$) made of an ethylene-vinyl alcohol copolymer, a second adhesive layer ($L_{a2}$) made of acid-modified polyethylene, and a second base layer ($L_{P2}$) made of HDPE1 were 9.3 μm, 1.5 μm, 3.3 μm, 1.5 μm, and 9.3 μm, respectively (therefore, the proportion of the specific high-density polyethylene in the entire barrier base film was 74.7 mass%).

a. HDPE1: High-density polyethylene (density: 0.951 g/cm$^3$, melting point: 133°C, MFR: 1.0 g/10 min)
b. Acid-modified polyethylene: (density: 0.91 g/cm$^3$, melting point: 120°C, MFR: 2.3 g/10 min, ADMER NF587 manufactured by Mitsui Chemicals, Inc.)
c. Ethylene-vinyl alcohol copolymer: (density: 1.19 g/cm$^3$, melting point: 183°C, MFR: 1.6 g/10 min, ethylene content: 32 mol%, EVAL F171B manufactured by Kuraray Co., Ltd.)
d. Acid-modified polyethylene: (density: 0.91 g/cm$^3$, melting point: 120°C, MFR: 2.3 g/10 min, ADMER NF587 manufactured by Mitsui Chemicals, Inc.)
e. HDPE1: High-density polyethylene (density: 0.951 g/cm$^3$, melting point: 133°C, MFR: 1.0 g/10 min)

Then, using the prepared barrier base film, the storage modulus at 100°C and the heat shrinkage rate at 120°C were measured by the methods described above. Further, using the prepared base film, the appearance after printing and

the appearance after heat sealing were evaluated by the methods described above. The measurement results and evaluation results of the base film of Example 8 are shown in Table 1 together with the properties of the base film.

[Comparative Example 1]

A uniaxially stretched polyethylene film (base film) of Comparative Example 1 was prepared in the same manner as in Example 1 except that the resin material was changed to MDPE (i.e., medium-density polyethylene having a density of 0.943 g/cm$^3$), the stretching temperature in stretching the unstretched film (primary film) in the machine direction (MD) was changed to 120°C, and the stretch ratio was changed to 4. Then, using the prepared base film, the storage modulus at 100°C and the heat shrinkage rate at 120°C were measured by the methods described above, and the appearance after printing and the appearance after heat sealing were evaluated by the methods described above. The measurement results and evaluation results of the base film of Comparative Example 1 are shown in Table 1 together with the properties of the base film.

[Comparative Example 2]

A uniaxially stretched polyethylene film (base film) of Comparative Example 2 was prepared in the same manner as in Example 1 except that the stretching temperature in stretching the unstretched film (primary film) in the machine direction (MD) was changed to 115°C. Then, using the prepared base film, the storage modulus at 100°C and the heat shrinkage rate at 120°C were measured by the methods described above, and the appearance after printing and the appearance after heat sealing were evaluated by the methods described above. The measurement results and evaluation results of the base film of Comparative Example 2 are shown in Table 1 together with the properties of the base film.

[Comparative Example 3]

An attempt was made to prepare a uniaxially stretched polyethylene film in the same manner as in Example 1 except that the stretching temperature in stretching the unstretched film (primary film) in the machine direction (MD) was changed to 130°C. However, at a stretching temperature of 130°C, frequent breakage due to resin melting occurred during stretching, and no uniaxially stretched polyethylene film suitable for evaluation was obtained.

[Comparative Example 4]

An attempt was made to prepare a uniaxially stretched polyethylene film in the same manner as in Example 1 except that the stretch ratio in stretching the unstretched film (primary film) in the machine direction (MD) was changed to 11. However, at a stretch ratio of 11, frequent breakage occurred during stretching, and no uniaxially stretched polyethylene film suitable for evaluation was obtained.

[Comparative Example 5]

A uniaxially stretched polyethylene film (base film) was prepared in the same manner as in Example 1 except that the stretch ratio in stretching the unstretched film (primary film) in the machine direction (MD) was changed to 3. However, at a stretch ratio of 3, the resulting uniaxially stretched polyethylene film exhibited significantly uneven stretching, and no uniaxially stretched polyethylene film suitable for evaluation was obtained.

[Comparative Example 6]

An unstretched film (primary film) was obtained in the same manner as in Example 1 except that the thickness was adjusted to about 26 μm. Then, using the obtained unstretched film, the storage modulus at 100°C and the heat shrinkage rate at 120°C were measured by the methods described above, and the appearance after printing and the appearance after heat sealing were evaluated by the methods described above. The measurement results and evaluation results of the base film (i.e., the unstretched film) of Comparative Example 6 are shown in Table 1 together with the properties of the base film.

[Table 1]

| | Layer structure | Resin materials | | | Film-forming conditions | | | | Base film properties | | | | Evaluation | | | |
|---|---|---|---|---|---|---|---|---|---|---|---|---|---|---|---|---|
| | | HDPE1 (d=0.951) | HDPE2 (d=0.960) | MDPE (d=0.943) | Stretching conditions (MD) | | Thickness (µm) | | Specific HDPE content (%) | Heat shrinkage rate at 120°C (MD:%) | Melting point (°C) | Storage modulus E' at 100°C (MD:MPa) | Film formability | Appearance after printing | Appearance after heat sealing | Overall evaluation |
| | | | | | Temperature (°C) | Ratio | Primary film | After stretching | | | | | | | | |
| Example 1 | Single-layer | 100 | - | - | 127 | 6 | 147.4 | 23.8 | 100 | 1 | 136.4 | 737 | Good | ◎ | ○ | ○ |
| Example 2 | Single-layer | - | 100 | - | 127 | 6 | 151.4 | 24.0 | 100 | 0.7 | 135.7 | 1026 | Good | ◎ | ◎ | ◎ |
| Example 3 | Single-layer | 100 | - | - | 125 | 6 | 147.4 | 24.2 | 100 | 1.1 | 136.3 | 678 | Good | ○ | ○ | ○ |
| Example 4 | Single-layer | 100 | - | - | 120 | 6 | 147.4 | 24.8 | 100 | 1.8 | 135.9 | 500 | Good | ○ | ○ | ○ |
| Example 5 | Single-layer | 100 | - | - | 128 | 6 | 147.4 | 25.4 | 100 | 0.4 | 136.7 | 587 | Good | ○ | ◎ | ○ |
| Example 6 | Single-layer | 100 | - | - | 125 | 4.5 | 103.8 | 22.0 | 100 | 0.9 | 135.9 | 466 | Good | ○ | ◎ | ○ |
| Example 7 | Single-layer | 100 | - | - | 127 | 10 | 246.2 | 27.2 | 100 | 0.2 | 138.5 | 1329 | Good | ◎ | ◎ | ◎ |
| Example 8 | Multilayer* | 100 | - | - | 127 | 6 | 156.6 | 24.9 | 74.7 | 0.9 | 136.6 | 794 | Good | ◎ | ◎ | ◎ |
| Comparative Example 1 | Single-layer | - | - | 100 | 120 | 4 | 114.2 | 27.6 | 0 | 12.6 | 127.1 | 184 | Good | × | × | × |
| Comparative Example 2 | Single-layer | 100 | - | - | 115 | 6 | 147.4 | 24.8 | 100 | 5.5 | 135.8 | 495 | Good | ○ | × | × |
| Comparative Example 3 | Single-layer | 100 | - | - | 130 | 6 | 147.4 | - | 100 | - | - | - | Melt fracture | - | - | × |
| Comparative Example 4 | Single-layer | 100 | - | - | 127 | 11 | 147.4 | - | 100 | - | - | - | Breakage | - | - | × |
| Comparative Example 5 | Single-layer | 100 | - | - | 127 | 3 | 103.8 | - | 100 | - | - | - | Non-uniform | - | - | × |

(continued)

| | Layer structure | Resin materials | | | Film-forming conditions | | | | Base film properties | | | | Evaluation | | | |
|---|---|---|---|---|---|---|---|---|---|---|---|---|---|---|---|---|
| | | HDPE1 (d=0.951) | HDPE2 (d=0.960) | MDPE (d=0.943) | Stretching conditions (MD) | | Thickness (μm) | | Specific HDPE content (%) | Heat shrinkage rate at 120°C (MD:%) | Melting point (°C) | Storage modulus E' at 100°C (MD:MPa) | Film formability | Appearance after printing | Appearance after heat sealing | Overall evaluation |
| | | | | | Temperature (°C) | Ratio | Primary film | After stretching | | | | | | | | |
| Comparative Example 6 | Single-layer | 100 | - | - | - | - | 26.4 | - | 100 | 1.7 | 131.8 | 84 | Opaque | × | ○ | × |

Multilayer*: Barrier base film including a layer containing an ethylene-vinyl alcohol copolymer

From Table 1, it can be seen that, when bags were produced using the base films or barrier base films in which the specific high-density polyethylene was used as a main raw material and the storage modulus at 100°C and the heat shrinkage rate at 120°C satisfied the requirements of the present invention (Examples 1 to 8), no print misregistration occurred and the appearance after heat sealing was excellent. In contrast, in Comparative Example 1, since a base film made of polyethylene having a density of less than 0.95 g/cm3 was used, the film could not be stretched to more than 4 times, resulting in a low storage modulus at 100°C and making print misregistration likely to occur. Moreover, since the heat shrinkage rate at 120°C was high, wrinkling is likely to occur during heat sealing. In Comparative Example 2, since the stretching temperature was as low as 115°C, the dimensional stability achieved by heat treatment decreased, and the heat resistance was reduced (i.e., the heat shrinkage rate at 120°C increased), indicating that wrinkling was likely to occur during heat sealing. In Comparative Example 6, since the base film was not stretched, the storage modulus at 100°C was low, indicating that print misregistration was likely to occur.

INDUSTRIAL APPLICABILITY

Since the base film according to the present invention exhibits excellent effects as described above, it can suitably be used as materials for packaging films used to form various types of packaging bags.

DESCRIPTION OF REFERENCE CHARACTERS

F: Barrier base film
$L_{P1}$: First base layer made of specific high-density polyethylene
$L_{a1}$: First adhesive layer
$L_B$: Barrier resin layer
$L_{a2}$: Second adhesive layer
$L_{P2}$: Second base layer made of specific high-density polyethylene

## Claims

**1.** A base film for a packaging film, the base film being configured to be laminated with a sealant film to provide a packaging film, the base film comprising

a stretched film including at least one base layer containing, as a main component, high-density polyethylene having a density of 0.95 g/cm$^3$ or more, wherein
the base film has a storage modulus at 100°C of 400 MPa or more and a heat shrinkage rate in a stretching direction at 120°C of less than 5%.

**2.** The base film for a packaging film according to claim 1, wherein
the base layer contains 90 mass% or more of the high-density polyethylene having a density of 0.95 g/cm$^3$ or more.

**3.** A barrier base film for a packaging film, the barrier base film comprising:

two of the base layers according to claim 1 or 2, the two base layers being provided on front and back sides of the barrier base film; and
a barrier layer made of a barrier resin and interposed between the two base layers.

**4.** The barrier base film for a packaging film according to claim 3, wherein
the barrier resin contains an ethylene-vinyl alcohol copolymer as a main component.

**5.** A barrier base film for a packaging film, the barrier base film comprising:

the base film according to claim 1 or 2; and
a vapor-deposited layer provided on one surface of the base film.

**6.** A barrier base film for a packaging film, the barrier base film comprising:

the base film according to claim 1 or 2; and
a coating layer provided on one surface of the base film.

**7.** A packaging film comprising:

the barrier base film according to claim 3; and
a sealant film laminated on one of the base layers of the barrier base film.

FIG.1

F
Lp2
La2
LB
La1
Lp1

**INTERNATIONAL SEARCH REPORT**

International application No.
**PCT/JP2024/032902**

**A. CLASSIFICATION OF SUBJECT MATTER**

***C08J 5/18***(2006.01)i; ***B32B 9/00***(2006.01)i; ***B32B 27/28***(2006.01)i; ***B32B 27/32***(2006.01)i; ***B65D 65/40***(2006.01)i
FI: C08J5/18 CES; B32B9/00 A; B32B27/28 102; B32B27/32 Z; B65D65/40 D

According to International Patent Classification (IPC) or to both national classification and IPC

**B. FIELDS SEARCHED**

Minimum documentation searched (classification system followed by classification symbols)

C08J5/18; B32B1/00-43/00; B29C48/00-48/96; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-068502 A (JAPAN POLYETHYLENE CORP.) 17 May 2023 (2023-05-17) entire text, in particular, claims, paragraphs [0050]-[0058], [0074]-[0094] | 1, 2, 5, 6 |
| X | JP 2022-039843 A (JAPAN POLYETHYLENE CORP.) 10 March 2022 (2022-03-10) entire text, in particular, claims, paragraphs [0024], [0031], [0035], [0039]-[0047], [0059]-[0060] | 1, 2, 5, 6 |
| X | WO 2023/233902 A1 (C I TAKIRON CORP.) 07 December 2023 (2023-12-07) entire text, in parituclar, claims, paragraphs [0021]-[0037], [0053]-[0068] | 1, 2 |
| X | JP 2013-091729 A (MITSUI CHEMICALS, INC.) 16 May 2013 (2013-05-16) entire text, in parituclar, claims, paragraphs [0019], [0027], [0088]-[0097] | 1, 2 |
| X | JP 2007-137968 A (DENKI KAGAKU KOGYO KK) 07 June 2007 (2007-06-07) entire text, in parituclar, claims, paragraphs [0021]-[0025] | 1, 2 |
| X | JP 2023-068503 A (JAPAN POLYETHYLENE CORP.) 17 May 2023 (2023-05-17) entire text, in parituclar, claims, paragraphs [0032], [0050], [0056], [0078]-[0092] | 1, 5, 6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No. PCT/JP2024/032902

C. DOCUMENTS CONSIDERED TO BE RELEVANT

| Category* | Citation of document, with indication, where appropriate, of the relevant passages | Relevant to claim No. |
|---|---|---|
| A | JP 54-021473 A (TOYO SEIKAN KAISHA LTD.) 17 February 1979 (1979-02-17) entire text | 1-7 |
| P, X | WO 2024/029200 A1 (C I TAKIRON CORP.) 08 February 2024 (2024-02-08) entire text, in parituclar, claims, paragraphs [0022]-[0026], [0032], [0041]-[0047], [0067]-[0075], [0094]-[0113] | 1, 3, 4, 7 |

Form PCT/ISA/210 (second sheet) (July 2022)

**INTERNATIONAL SEARCH REPORT**
**Information on patent family members**

International application No.
**PCT/JP2024/032902**

| Patent document cited in search report | Publication date (day/month/year) | Patent family member(s) | Publication date (day/month/year) |
|---|---|---|---|
| JP 2023-068502 A | 17 May 2023 | (Family: none) | |
| JP 2022-039843 A | 10 March 2022 | (Family: none) | |
| WO 2023/233902 A1 | 07 December 2023 | JP 2023-177661 A | |
| | | TW 202405066 A | |
| JP 2013-091729 A | 16 May 2013 | (Family: none) | |
| JP 2007-137968 A | 07 June 2007 | (Family: none) | |
| JP 2023-068503 A | 17 May 2023 | (Family: none) | |
| JP 54-021473 A | 17 February 1979 | (Family: none) | |
| WO 2024/029200 A1 | 08 February 2024 | TW 202413111 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019171860 A